# EUROPÄISCHE PATENTSCHRIFT

(11) **EP 2 686 193 B1**
(45) Veröffentlichungstag und Bekanntmachung des Hinweises auf die Patenterteilung: **13.05.2015**
(21) Anmeldenummer: 12710869.4
(22) Anmeldetag: 14.03.2012
(51) Int. Cl.: B60K 35/00, B60Q 1/00, F21V 8/00, G02B 6/00

(54) **FENSTERVORRICHTUNG MIT BELEUCHTUNG FÜR EIN KRAFTFAHRZEUG**
WINDOW DEVICE WITH ILLUMINATION FOR A MOTOR VEHICLE
SYSTÈME DE FENÊTRE ÉQUIPÉ D'UN ÉCLAIRAGE POUR UN VÉHICULE À MOTEUR

(30) Priorität: 17.03.2011 DE 102011014263
(43) Veröffentlichungstag der Anmeldung: 22.01.2014
(73) Patentinhaber: Audi AG, 85045 Ingolstadt (DE)
(72) Erfinder: REUSCHEL, Jens Dietmar, 85053 Ingolstadt (DE); SCHMITZ, Christoph, 93326 Abensberg (DE); TOVAR, Johannes, 85049 Ingolstadt (DE)
(74) Vertreter: Thielmann, Frank
(86) Internationale Anmeldenummer: PCT/EP2012/001130
(87) Internationale Veröffentlichungsnummer: WO 2012/123110

(56) Entgegenhaltungen:
- DE-A1- 4 211 728
- DE-A1-102009 010 623
- DE-U1-202006 006 051
- JP-A- 6 122 343
- JP-A- 2001 105 849
- JP-A- 2002 297 070
- US-A- 4 892 369

## Beschreibung

Die vorliegende Erfindung betrifft eine Fenstervorrichtung für ein Kraftfahrzeug mit einer transparenten ersten Scheibe einschließlich einer ersten Struktur zum Auskoppeln von Licht, einer transparenten zweiten Scheibe, die mit der ersten Scheibe parallel verbunden ist, und einer Beleuchtungseinrichtung zum Einkoppeln von Licht in die erste Scheibe. Darüber hinaus betrifft die vorliegende Erfindung ein Fahrerassistenzsystem mit einer derartigen Fenstervorrichtung sowie ein Kraftfahrzeug mit einem Fahrerassistenzsystem.

Fahrzeuge besitzen verschiebbare Scheiben, mit denen Fenster in der Karosserie des Fahrzeugs geöffnet und geschlossen werden können. Ob ein Fenster offen oder geschlossen ist, ist oft nicht auf einen Blick zu erkennen. Daher besteht der Bedarf, den Öffnungszustand des Fensters den Fahrzeuginsassen deutlicher anzuzeigen.

Außerdem besitzen moderne Fahrzeuge zahlreiche Assistenzsysteme. Zum einen soll der Fahrer beim Führen des Fahrzeugs unterstützt werden (z. B. Spurassistent, Überholwarner, Abstandswarner) und zum anderen können auch Beifahrer gewarnt werden (z. B. Warnung vor einem vorbeifahrenden Fahrrad beim Aussteigen). Diese Assistenzsysteme liefern meist optische Hinweise beziehungsweise Warnungen. Daher ist es wichtig, diese optischen Hinweise und Warnungen an Stellen zu geben, die sich in der Blickrichtung des Insassen befinden.

Eine gattungsgemäße Fenstervorrichtung ist aus der Druckschrift DE 103 13 067 A1 bekannt. Dort ist ein Fahrzeugdach mit einem verstellbaren, nicht transparenten Deckel zum wahlweisen Verschließen beziehungsweise Freigeben einer Dachöffnung beschrieben. An der Unterseite der Deckelplatte ist eine transparente Platte befestigt, die an einer Kante aus einer Lichtquelle beleuchtbar ist und so ausgebildet ist, dass an der Kante eingestrahltes Licht mittels Streuung oder Reflektion zum Fahrzeuginnenraum hin austritt. Beispielsweise kann die Auskopplung des Lichts durch Vertiefungen erfolgen, die durch Lasergravur in die Scheibe eingebracht wurden. Es können aber auch Linien oder Punkte oder zweidimensionale Strukturen beispielsweise mittels Siebdruck zum Auskoppeln des Lichts auf die Scheibe aufgebracht werden. An der zum Fahrzeuginnenraum hinweisenden Seite der Platte ist eine von einer zweiten dünneren Platte gebildete Streuscheibe vorgesehen, die mit der Platte beispielsweise verklebt oder laminiert ist.

Die DE 10 2009 010 623 A1 beschreibt eine Vorrichtung zur Ausgabe einer optischen Warninformation an einen Fahrzeugführer. Zum Erzeugen einer Warninformation emittiert eine Lichtquelle Licht in eine Scheibe. Die Lichtquelle und eine Scheibe des Fahrzeugs sind derart zueinander angeordnet, dass zumindest ein Teil des von der Lichtquelle emittierten und in die Scheibe eingeleiteten Lichts in den Fahrzeuginnenraum austritt.

Aus der Patentschrift DE 198 52 593 B4 ist eine Vorrichtung zum Beleuchten eines Innenraums bekannt, die als Flächenleuchte ausgebildet ist. Das von einer Lichtquelle erzeugte Licht wird über eine Plattenkante in die Platte eingekoppelt und an Streustellen in der Platte nach allen Richtungen gestreut.

Ferner zeigt die Druckschrift DE 10 2006 047 878 A1 ein Dachfenster für ein Kraftfahrzeug, das eine Lichtquelle zur Einleitung von Licht in den transparenten keilförmigen, im wesentlichen massiven Körper umfasst.

Ein Dachfenster mit Beleuchtung ist auch in der Druckschrift EP 1 903 359 A2 beschrieben. Dort sind Leuchtmittel am Umfang einer geschichteten Scheibe angeordnet.

Ferner offenbart die Druckschrift DE 203 06 311 U1 eine Anordnung zur Erzeugung animierter visueller Effekte in teiltransparenten Kunststoffscheiben. Dabei sind Flächen der Scheiben mit einem Laserstrahl mattiert. Licht wird über die Seitenflächen eingekoppelt. Die Anordnung kann mehrere übereinander liegende Scheiben aufweisen. Durch zeitlich variierende Beleuchtung der einzelnen Scheiben entstehen animierte Bilder.

Schließlich offenbart die Druckschrift DE 101 47 267 A1 ein Bremslicht-System für Fahrzeuge. Ein Lichtstrahler strahlt einen gebündelten Lichtstrahl in den Rand einer Heckscheibe. Die Lichtstrahlen werden durch totale Reflektion in der Scheibe gehalten. Wenn die Lichtstrahlen auf einen Bereich in der Scheibe treffen, die eine Lichtbrechung oder eine Lichtreflektion unter einem bestimmten Winkel verursachen, dann verlassen die Lichtstrahlen die Glasscheibe. Derartige Lichtbrecher können aus mehreren parallel angeordneten "Schnittlinien" bestehen und an einer Stelle platziert sein, die für Bremslichter vorgesehen sind.

Die Aufgabe der vorliegenden Erfindung besteht darin, einen Insassen eines Fahrzeugs besser mit optischen Hinweisen eines Assistenzsystems unterstützen zu können.

Erfindungsgemäß wird diese Aufgabe gelöst durch eine Fenstervorrichtung für ein Kraftfahrzeug mit
- einer transparenten ersten Scheibe einer Verbundglasscheibe einschließlich einer ersten Struktur zum Auskoppeln von Licht,
- einer transparenten zweiten Scheibe der Verbundglasscheibe, die mit der ersten Scheibe parallel verbunden ist, und
- einer Beleuchtungseinrichtung zum Einkoppeln von erstem Licht in die ersten Scheibe, wobei
- die zweite Scheibe eine zweite Struktur zum Auskoppeln von Licht aufweist, und
- mit der Beleuchtungsvorrichtung unabhängig von dem ersten Licht ein zweites Licht in die zweite Scheibe einkoppelbar ist.

Unter einer Struktur zum Auskoppeln von Licht wird hier jedes Gebilde verstanden, das gezielt zum Auskoppeln von Licht (insbesondere durch Streuung) in eine Scheibe eingebracht ist.

In vorteilhafter Weise wird damit die Schichtstruktur einer typischen Fahrzeugscheibe zum Darbieten von verschiedenen Informationen genutzt. Zum einen wird nämlich mittels Beleuchtung der ersten Scheibe der Scheibenrand deutlich erkenntlich gemacht. Dadurch kann ein Insasse leichter erkennen, ob ein Fenster geöffnet, geschlossen oder teilweise geöffnet ist. Mit der zweiten Scheibe kann dann eine weitere optische Information bereitgestellt werden, denn sie weist eine Auskoppelstruktur im Innenbereich der Scheibe auf. Wenn die beiden Scheiben in etwa gleiche Gestalt besitzen, sind somit die von ihnen abgegeben optischen Informationen leicht unterscheidbar. Vorzugsweise ist mit der Beleuchtungsvorrichtung das erste Licht in eine Stirnseite der ersten Scheibe und das zweite Licht in eine Stirnseite der zweiten Scheibe einkoppelbar. Dies hat den Vorteil, dass das Licht wegen der Totalreflektion eher in der Scheibe bleibt, bevor es auf eine entsprechende Streu- beziehungsweise Auskoppelstruktur trifft.

Vorteilhaft ist ebenfalls, wenn das erste Licht und das zweite Licht von zwei verschiedenen Lichtquellen der Beleuchtungsvorrichtung stammt. Damit können die Lichtquellen ohne großen Aufwand unabhängig voneinander gesteuert werden.

In einer Ausführungsform befindet sich die erste Struktur zum Auskoppeln von Licht an mindestens einer Stirnseite der ersten Scheibe. Damit wird Licht an der Stirnseite, d. h. am Rand, aus der ersten Scheibe ausgekoppelt. Dies lässt sich dazu nutzen, dem Insassen anzuzeigen, in welcher Position sich eine verschiebbare Scheibe befindet.

Bei einer weiteren Ausführungsform befindet sich die zweite Struktur zum Auskoppeln von Licht in einem von den Stirnseiten der zweiten Scheibe verschiedenen Bereich der zweiten Scheibe. Die Auskuppelstruktur befindet sich somit in einem Innenbereich der Scheibe, sodass praktisch die gesamte Scheibenfläche für mehr oder weniger große Symbole als Anzeigefläche genutzt werden kann.

Die Strukturen zum Auskoppeln von Licht können durch Aufkleben auf die jeweilige Scheibe, Ätzen der jeweiligen Scheibe, Lasern der jeweiligen Scheibe und/oder Sandstrahlen der jeweiligen Scheibe hergestellt werden. In jedem Fall wird hierdurch die Reflektion beziehungsweise Streuung des Lichts in oder an der Scheibe beeinflusst, was zu einer jeweiligen optischen Erscheinung am Ort dieser Strukturen führt.

Bei einer besonders bevorzugten Ausführungsform ist zwischen den beiden Scheiben eine Folie eingeklebt. Damit kann eine Verbundscheibe, die einen hohen Sicherheitsstandard bietet, für die optischen Anzeigen genutzt werden.

Des weiteren kann die zweite Scheibe von der Beleuchtungsvorrichtung mit einer anderen Intensität und/oder einer anderen Farbe beleuchtet werden als die erste Scheibe. Damit können die Informationen, die von der ersten Scheibe geliefert werden, von einem Fahrzeuginsassen leichter unterschieden werden von den optischen Hinweisen, die von der zweiten Scheibe kommen.

Wie oben bereits angedeutet wurde, ist es besonders vorteilhaft, wenn ein Fahrerassistenzsystem mit der beschriebenen Fenstervorrichtung ausgestattet wird. Dabei wird dann ein optischer Hinweis, insbesondere ein Warnhinweis des Fahrerassistenzsystems von der Fenstervorrichtung erzeugt. Auf diese Weise lässt sich also die ansonsten für Informationen ungenutzte Fläche von Fensterscheiben für optische Hinweise nutzen.

Die vorliegende Erfindung wird nun anhand der beigefügten Zeichnungen näher erläutert, in denen zeigen:
- Fig. 1: eine schematische Ansicht einer Fenstervorrichtung gemäß der vorliegenden Erfindung in der Seitenansicht und
- Fig. 2: eine Schrägansicht eines Ausschnitts der Fenstervorrichtung von Fig. 1.

Die nachfolgend näher geschilderten Ausführungsbeispiele stellen bevorzugte Ausführungsformen der vorliegenden Erfindung dar.

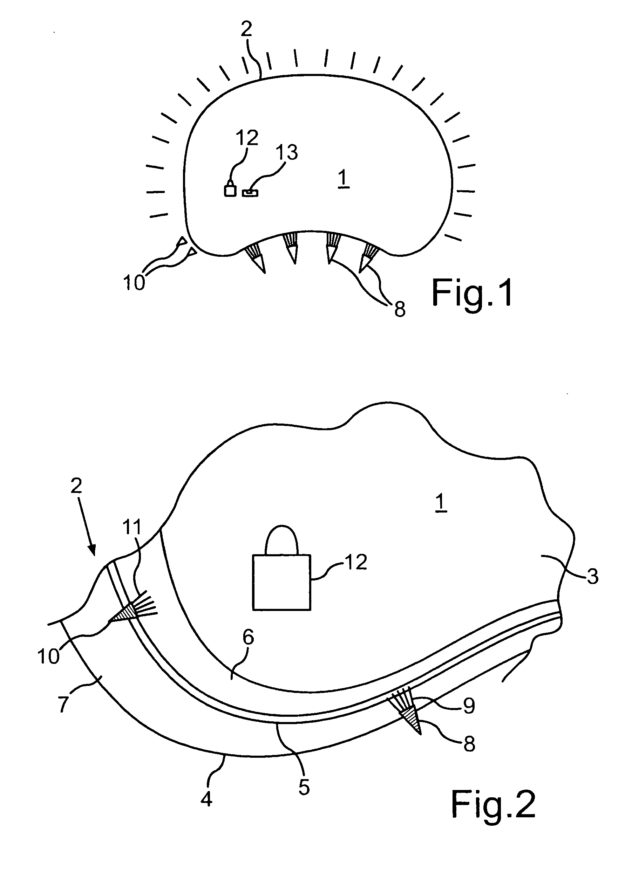

Ein Kraftfahrzeug weist beispielsweise eine Fensterscheibe 1 auf, die in Fig. 1 dargestellt ist. Diese Fensterscheibe 1 ist beispielsweise in einem Seitenfenster des Kraftfahrzeugs angeordnet. Sie ist verschiebbar, d. h. sie kann nach oben und unten oder seitwärts bewegt werden, um das entsprechende Fenster zu öffnen beziehungsweise zu schließen.

Die Fensterscheibe 1 besitzt einen Rand 2, der im vorliegenden Dokument auch als Stirnseite beziehungsweise Stirnfläche bezeichnet wird. Während die Scheibe 1 in der Regel volltransparent ist, ist der Rand 2 meist teiltransparent beziehungsweise streuend. Der Rand 2 wird beispielsweise durch Sandstrahlen hergestellt, sodass er sein typisch milchiges Aussehen bekommt.

Bei der Fensterscheibe 1 handelt es sich um eine Verbundglasscheibe. Dies bedeutet, dass die Fensterscheibe 1 aus zwei Scheiben 3, 4 besteht, die mit einer Folie 5 zusammengeklebt sind. Dies geht aus Fig. 2 hervor, welche einen Abschnitt der Fensterscheibe von Fig. 1 in vergrößerter Darstellung wiedergibt. Insbesondere ist die Struktur des Rands 2 verdeutlicht, denn es ist dort die Stirnfläche beziehungsweise der Rand 6 der einen Scheibe 3 und die Stirnfläche beziehungsweise der Rand 7 der anderen Scheibe 4 erkennbar.

Beide Scheiben 3, 4 sind hier gleichgroß, was aber nicht zwingend ist. Auch die Folie 5 besitzt hier im wesentlichen die gleiche flächenmäßige Ausdehnung wie die beiden Scheiben 3, 4. Die Scheibe 3 ist beispielsweise dem Fahrzeuginnenraum zugewandt, während die Scheibe 4 nach außen gewandt ist.

In den Rand 7 der äußeren Scheibe 4 wird mit einem Leuchtelement 8, das Teil einer Leuchtvorrichtung ist, Licht 9 eingekoppelt. In dem Beispiel von Fig. 1 weist die Beleuchtungsvorrichtung mehrere Leuchtelemente 8 auf, die Licht in die erste Scheibe 4 an deren Rand 7 einkoppeln. Das Licht 9 wird durch Totalreflektion innerhalb der ersten Scheibe 4 bis zu dem jeweiligen gegenüberliegenden Randabschnitt geleitet. Sofern der dortige Randabschnitt des Rands 7 nicht volltransparent sondern beispielsweise geätzt oder sandgestrahlt (= Struktur zum Auskoppeln von Licht) ist ergibt sich dort eine entsprechende Streuung, sodass ein Fahrzeuginsasse den Rand 2 der Fensterscheibe 1 beleuchtet wahrnehmen kann. Damit kann er sowohl bei Tag als auch bei Nacht, ohne viel Aufmerksamkeit verschenken zu müssen, wahrnehmen, inwieweit das Fenster offen ist oder nicht. Dabei ist es günstig, wenn das erste Licht 9 beispielsweise von unten in die Fensterscheibe 1 beziehungsweise die äußere Scheibe 4 eingekoppelt wird. Die Leuchtelemente 8 sind dabei vorteilhaft in der Tür des Kraftfahrzeugs untergebracht.

Der leuchtende Rand der Fensterscheibe 1 zeigt die Begrenzung der Fensterscheibe an. Dadurch kann grundsätzlich die Verletzungsgefahr gemindert werden, die sich bei der Handhabung eines verschiebbaren Fensters ergibt. Insbesondere kann die Gefahr reduziert werden, dass man sich bei heruntergefahrenen Scheiben oder bei Fahrzeugen mit rahmenlosen Türen (z. B. Cabriolets oder Coupes) beispielsweise den Kopf an die Scheibe stößt.

Die zweite Scheibe 3 der Fensterscheibe 1 wird von einem oder mehreren Leuchtelementen 10 beleuchtet. Auch diese Leuchtelemente 10 sind Teil der Beleuchtungsvorrichtung. Sie koppeln zweites Licht 11 in den Rand 6 der zweiten Scheibe 3 ein. Dieses zweite Licht 11 dient zum Beleuchten einer zweiten Struktur innerhalb der zweiten Scheibe 3. Bei der zweiten Struktur handelt es sich beispielsweise um ein oder mehrere Symbole 12, 13. Die Symbole 12, 13 sind hier durch zwei Beleuchtungselemente 10 beleuchtet. Damit können sie beispielsweise unterschiedlich farbig beleuchtet werden. Die Leuchtelemente 10 sind von der Lichtstärke und ihrer Ausrichtung jedoch so ausgelegt, dass sie trotz Einkopplung in die innere Scheibe 3 nicht bis hin zu ihrem Rand 6 eine wahrnehmbare Lichtstärke einbringen. Ihre Lichtstärke reicht jedoch aus, dass sie die Strukturen mit Symobolgestalt, also die Symbole 12 und 13 leuchten lassen. Die Strukturen sind durch Klebung, Ätzung, Lasern, Sandstrahlen der inneren Scheibe 3 erzeugbar. Alternativ kann eine derartige Struktur auch dadurch realisiert werden, dass die Schicht beziehungsweise Folie 5 zwischen den beiden Scheiben 3, 4 gezielt lokal geschädigt wird. Auch dadurch ergeben sich für Licht, das in die innere Scheibe 3 eingekoppelt wird, an der Grenzschicht zu der Folie 5 Orte der Streuung, die die entsprechenden Symbole leuchten lassen. Derartige leuchtende Strukturen lassen sich insbesondere für eine Wamfunktion ausnutzen.

Die Warnfunktion kann allgemein dadurch realisiert werden, dass eine Steuervorrichtung ein Signal überprüft. Erfüllt das Signal eine vorgegebene Bedingung, so steuert die Steuervorrichtung eine dafür vorgesehene Leuchtvorrichtung an. Die Leuchtvorrichtung besitzt den Aufbau, wie er oben geschildert wurde.

Warnfunktionen sind, wie oben bereits angedeutet wurde, insbesondere für Fahrerassistenzsysteme hilfreich. So kann die obige Leuchtvorrichtung beispielsweise für einen "Abstandswarner" eingesetzt werden. Der "Abstandswarner" kontrolliert ständig, ob ein bestimmter Abstand zum Vordermann eingehalten wird. Die Kontrolle erfolgt beispielsweise mittels Radar. Wird ein Mindestabstand unterschritten, so muss der Fahrer in geeigneter Weise gewarnt werden. Dies kann hier beispielsweise mittels der geschilderten Leuchtvorrichtung unterhalb der Windschutzscheibe, am Armaturenbrett oder dergleichen erfolgen.

Die erfindungsgemäße Leuchtvorrichtung kann auch für ein Fahrerassistenzsystem "Überholwarner" genutzt werden. Dabei tastet beispielsweise ein Radarstrahl den hinteren Bereich eines Kraftfahrzeugs ab. Wird ein überholendes Fahrzeug festgestellt und hat das eigene Fahrzeug den Blinker auf die Spur des überholenden Fahrzeugs gesetzt oder wird ein Lenkwinkel des eigenen Fahrzeugs in Richtung auf die Spur des überholenden Fahrzeugs registriert, so kann eine entsprechende Überholwarnung optisch abgegeben werden. Dies erfolgt beispielsweise dadurch, dass ein Lauflicht an der Innenseite der Tür an der Seite des überholenden Fahrzeugs einen Überholvorgang andeutet. Beispielsweise kann dies durch ein rotes Lauflicht erfolgen, das sich in Fahrtrichtung nach vorne bewegt.

Eine weitere Anwendungsmöglichkeit der erfindungsgemäßen Leuchtvorrichtung bei einem Fahrerassistenzsystem wäre der Einsatz bei einem "Ausstiegsassistenten". Hält das Fahrzeug beispielsweise neben einem Fahrradweg an, und ein Insasse will aussteigen, so kann mit einer entsprechenden Beleuchtung der Tür angezeigt werden, ob ein gefahrloses Öffnen der Tür möglich ist oder nicht. Wenn keine Gefahr besteht, so kann die Tür beispielsweise innen grün beleuchtet werden, während sie bei Gefahr, d. h. beispielsweise bei einem sich nähernden oder bei einem vorbeifahrenden Fahrrad, rot leuchtet.

Auch andere Fahrerassistenzsysteme können mit der erfindungsgemäßen Leuchtvorrichtung ausgestattet werden. Dabei kann die Leuchtvorrichtung in der Fläche sehr groß ausgebildet sein, da sie bei Nichtgebrauch ein hochwertiges Dekorelement darstellt.

Erfindungsgemäß ist es somit möglich, in Scheiben eines Fahrzeugs, vorzugsweise verschiebbare Scheiben wie Seitenscheiben, Licht einzukoppeln und dieses an den Kanten austreten zu lassen, sodass nicht die ganzen Scheiben, sondern nur die Kanten leuchten. Damit lässt sich z. B. bei heruntergefahrenen Scheiben oder Fahrzeugen mit rahmenlosen Türen wie Cabrios oder Coupes die Sicherheit erhöhen, sich nicht den Kopf an der Scheibe zu stoßen. Gleichzeitig wird die Doppelscheibe dazu genutzt, in einem inneren Bereich aufgebrachte Strukturen zu beleuchten und damit entsprechende zusätzliche Informationen, insbesondere Warnhinweise an einen Fahrzeuginsassen zu übermitteln.

## Patentansprüche

1. Fenstervorrichtung für ein Kraftfahrzeug mit
- einer Verbundglasscheibe (1) mit
• einer transparenten ersten Scheibe (4) einschließlich einer ersten Struktur zum Auskoppeln von Licht,
• einer transparenten zweiten Scheibe (3), die mit der ersten Scheibe (4) parallel verbunden ist, wobei zwischen die beiden Scheiben (3,) eine Folie eingeklebt ist, und
- einer Beleuchtungseinrichtung (8, 10) zum Einkoppeln von erstem Licht (9) in die erste Scheibe (4),
**dadurch gekennzeichnet, dass**
- die zweite Scheibe (3) eine zweite Struktur (12, 13) zum Auskoppeln von Licht aufweist, und
- mit der Beleuchtungsvorrichtung (8, 10) unabhängig von dem ersten Licht (9) ein zweites Licht (11) in die zweite Scheibe (3) einkoppelbar ist.

2. Fenstervorrichtung nach Anspruch 1, wobei mit der Beleuchtungsvorrichtung (8, 10) das erste Licht (9) in eine Stirnseite (7) der ersten Scheibe (4) und das zweite Licht (11) in eine Stirnseite (16) der zweiten Scheibe (3) einkoppelbar ist.

3. Fenstervorrichtung nach Anspruch 1 oder 2, wobei das erste Licht (9) und das zweite Licht (11) von zwei verschiedenen Lichtquellen der Beleuchtungsvorrichtung (8, 10) stammt.

4. Fenstervorrichtung nach einem der vorhergehenden Ansprüche, wobei sich die erste Struktur zum Auskoppeln von Licht an mindestens einer Stirnseite (7) der ersten Scheibe (4) befindet.

5. Fenstervorrichtung nach einem der vorhergehenden Ansprüche, wobei sich die zweite Struktur (12, 13) zum Auskoppeln von Licht in einem von der Stirnseite (6) der zweiten Scheibe (3) verschiedenen Bereich der zweiten Scheibe (3) befindet.

6. Fenstervorrichtung nach einem der vorhergehenden Ansprüche, wobei die Strukturen zum Auskoppeln von Licht durch Aufkleben auf die jeweilige Scheibe (3, 4), Ätzen der jeweiligen Scheibe (3, 4), Lasern der jeweiligen Scheibe (3, 4) und/oder Sandstrahlen der jeweiligen Scheibe (3, 4) hergestellt sind.

7. Fenstervorrichtung nach einem der vorhergehenden Ansprüche, wobei die zweite Scheibe (3) von der Beleuchtungsvorrichtung (8, 10) mit einer anderen Intensität und/oder Farbe beleuchtet wird als die erste Scheibe (4).

8. Fahrerassistenzsystem mit einer Fenstervorrichtung nach einem der vorhergehenden Ansprüche, wobei ein optischer Hinweis, insbesondere ein Warnhinweis, mit der Fenstervorrichtung erzeugbar ist.

9. Kraftfahrzeug mit einem Fahrerassistenzsystem nach Anspruch 8 .

## Claims

1. Window device for a motor vehicle, comprising:
- a laminated glass pane (1) having
• a transparent first pane (4) including a first structure for coupling out light;
• a transparent second pane (3) which is connected in parallel with the first pane (4), a film being glued between the two panes (3,); and
- a lighting device (8, 10) for coupling a first light (9) into the first pane (4),
**characterised in that**
- the second pane (3) comprises a second structure (12, 13) for coupling out light, and
- using the lighting device (8, 10), a second light (11) can be coupled into the second pane (3) independently of the first light (9).

2. Window device according to claim 1, wherein, using the lighting device (8, 10), the first light (9) can be coupled into a front side (7) of the first pane (4) and the second light (11) into a front side (16) of the second pane (3).

3. Window device according to either claim 1 or claim 2, wherein the first light (9) and the second light (11) originate from two different light sources of the lighting device (8, 10).

4. Window device according to any of the preceding claims, wherein the first structure for coupling out light is located on at least one front side (7) of the first pane (4).

5. Window device according to any of the preceding claims, wherein the second structure (12, 13) for coupling out light is located in a region of the second pane (3), which region is different from the front side (6) of said second pane (3).

6. Window device according to any of the preceding claims, wherein the structures for coupling out light are produced by gluing onto the respective pane (3, 4), etching of the respective pane, (3, 4), laser treatment of the respective pane (3, 4), and/or sand blasting of the respective pane (3, 4).

7. Window device according to any of the preceding claims, wherein the second pane (3) is illuminated by the lighting device (8, 10) with a different light intensity and/or light colour to the first pane (4).

8. Driver assistance system comprising a window device according to any of the preceding claims, wherein a visual indication, in particular a warning, can be generated by the window device.

9. Motor vehicle comprising a driver assistance system according to claim 8.

## Revendications

1. Dispositif à fenêtre pour un véhicule à moteur, comprenant :
- une vitre de verre de sécurité feuilleté (1) comprenant :
• une première vitre transparente (4) comprenant une première structure de déclenchement de lumière,
• une seconde vitre transparente (3), qui est reliée parallèlement à la première vitre (4), dans lequel une feuille mince est collée entre les deux vitres (3,),
- un dispositif d'éclairage (8, 10) pour injecter une première lumière (9) dans la première vitre (4),
**caractérisé en ce que** :
- la seconde vitre (3) présente une seconde structure (12, 13) pour déclencher de la lumière et
- une seconde lumière (11) peut être injectée dans la seconde vitre (3) avec le dispositif d'éclairage (8, 10) indépendamment de la première lumière (9).

2. Dispositif de fenêtre selon la revendication 1, dans lequel, avec le dispositif d'éclairage (8, 10), on peut injecter la première lumière (9) dans une face avant (7) de la première vitre (4) et la seconde lumière (11) dans une face avant (16) de la seconde vitre (3).

3. Dispositif de fenêtre selon la revendication 1 ou la revendication 2, dans lequel la première lumière (9) et la seconde lumière (11) émanent de deux sources de lumière différentes du dispositif d'éclairage (8, 10).

4. Dispositif de fenêtre selon l'une quelconque des revendications précédentes, dans lequel la première structure de déclenchement de lumière se trouve sur au moins une face avant (7) de la première vitre (4).

5. Dispositif de fenêtre selon l'une quelconque des revendications précédentes, dans lequel la seconde structure (12, 13) de déclenchement de lumière se trouve dans une zone de la seconde vitre (3) qui est différente de la face avant (6) de la seconde vitre (3).

6. Dispositif de fenêtre selon l'une quelconque des revendications précédentes, dans lequel les structures de déclenchement de lumière sont fabriquées par collage sur la vitre respective (3, 4), gravure de la vitre respective (3, 4), passage au laser de la vitre respective (3, 4) et/ou sablage de la vitre respective (3, 4).

7. Dispositif de fenêtre selon l'une quelconque des revendications précédentes, dans lequel la seconde vitre (3) est éclairée par le dispositif d'éclairage (8, 10) avec une autre intensité et/ou une autre couleur que la première vitre (4).

8. Système d'assistance au chauffeur avec un dispositif de fenêtre selon l'une quelconque des revendications précédentes, dans lequel une alerte optique, en particulier une alerte d'avertissement, peut être produite avec le dispositif de fenêtre.

9. Véhicule à moteur équipé d'un système d'assistance au chauffeur selon la revendication 8.
